# EUROPEAN PATENT APPLICATION

(11) **EP 4 786 645 A1**
(43) Date of publication of application: **05.08.2026**
(21) Application number: 24872411.4
(22) Date of filing: 26.09.2024
(51) Int. Cl.: C23C 26/00, B32B 7/025, B32B 15/08, H01F 1/147, H01F 27/245

(54) **ELECTROMAGNETIC STEEL SHEET WITH ADHESIVE COATING FILM, LAMINATED CORE, AND MANUFACTURING METHOD THEREFOR**

(30) Priority: 26.09.2023 JP 2023163603
(71) Applicant: NIPPON STEEL CORPORATION, Chiyoda-ku Tokyo 100-8071 (JP)
(72) Inventor: FUKUCHI, Minako, Tokyo 1008071 (JP); TAKEDA, Kazutoshi, Tokyo 1008071 (JP)
(74) Representative: Vossius & Partner Patentanwälte Rechtsanwälte mbB
(86) International application number: PCT/JP2024/034462
(87) International publication number: WO 2025/070626

(57) **Abstract**

An adhesive surface-coated electrical steel sheet of the present invention includes: the electrical steel sheet; and the adhesive coating that is provided on at least a part of one surface or both surfaces of the electrical steel sheet, the adhesive coating including a crosslinkable thermoplastic resin A and a thermoplastic resin B other than the crosslinkable thermoplastic resin A, in which in the adhesive coating, the peak temperature in a logarithmic decrement curve measured by a rigid-body pendulum test is 130°C to 150°C, and the peak ratio P1/P2 of a peak logarithmic decrement P1 in the logarithmic decrement curve after heating at 200°C for 1 minute to a peak logarithmic decrement P2 in the logarithmic decrement curve before the heating is 0.70 to 1.30.

## Description

### TECHNICAL FIELD

The present disclosure relates to an adhesive surface-coated electrical steel sheet, a laminated core, and manufacturing methods therefor.

The present disclosure claims priority based on Japanese Patent Application No. 2023-163603 filed in Japan on September 26, 2023, the contents of which are incorporated herein by reference.

### BACKGROUND ART

Conventionally, as a core used in a rotary electric machine or the like, a "laminated core" in which a plurality of electrical steel sheets are laminated on each other is used. The plurality of electrical steel sheets are fixed by a method such as welding, caulking, bolting, or bonding.

However, in fixing the plurality of electrical steel sheets by the methods of welding, caulking, and bolting, mechanical stress, thermal stress, interlayer short-circuiting, and the like are likely to occur during processing. Therefore, the magnetic characteristics of the electrical steel sheet deteriorate, and it is difficult to sufficiently exhibit the performance of the laminated core.

On the other hand, when the plurality of electrical steel sheets are fixed by bonding, adhesive surface-coated electrical steel sheets are used, and adhesive coatings are cured through heating and pressing to develop adhesiveness, thereby bonding the plurality of electrical steel sheets to each other.

When the plurality of electrical steel sheets are fixed using the adhesive surface-coated electrical steel sheets, mechanical stress, thermal stress, interlayer short-circuiting, and the like are less likely to occur during the processing. Therefore, the magnetic characteristics of the electrical steel sheet are less likely to deteriorate, and the performance of the laminated core is likely to be sufficiently exhibited.

In view of such advantageous effects, various technologies have been studied for fixing the plurality of electrical steel sheets by bonding.

For example, Patent Document 1 discloses "an adhesive surface-coated electrical steel sheet having, on a surface thereof, an insulating coating that develops adhesiveness through heating and/or pressing, the coating being a mixture in which an epoxy resin or a modified epoxy resin having a glass transition temperature (Tg) of 80°C to 150°C, an epoxy resin curing agent, and a particulate polymer having a particle size of 0.01 µm to 0.5 µm are dispersed".

**In** addition, Patent Document 2 discloses "an electrical steel sheet laminated body including a plurality of electrical steel sheets and a fusion-bonding layer positioned between the plurality of electrical steel sheets, in which the fusion-bonding layer contains a polyethylene acrylate including a repeating unit represented by Chemical Formula 1 and a repeating unit represented by Chemical Formula 2, and the polyethylene acrylate contains 65 to 90 weight% of the repeating unit represented by Chemical Formula 1 and 10 to 35 weight% of the repeating unit represented by Chemical Formula 2".

In addition, Patent Document 3 discloses "an electrical steel sheet for lamination, including an electrical steel sheet and an adhesive insulating coating provided on at least one surface of the electrical steel sheet, the adhesive insulating coating having a Martens hardness (HM) of 50 or more and less than 500".

In addition, Patent Document 4 discloses "an electrical steel strip or electrical steel sheet provided, on one planar surface thereof, with at least one thermosetting baking enamel layer including an epoxy resin as a main component, at least one curing agent, and at least one filler, in which the filler of the baking enamel layer contains a metal carbonate, a metal sulfate, a metal sulfide, a metal silicate, or a metal phosphate, or any mixture composed of a plurality thereof".

In addition, Patent Document 5 discloses "an electrical steel sheet with an insulating coating, having a heat-resistant adhesive insulating coating on one surface or both surfaces of the electrical steel sheet, in which the heat-resistant adhesive insulating coating contains 10 mass% or more of a polycarbonate urethane resin having a softening point of 20°C to 200°C, and 10 to 1000 parts by mass of a phenol resin with respect to 100 parts by mass of the polycarbonate urethane resin".

### Citation List

### Patent Documents

Patent Document 1: PCT International Publication No. WO2004/070080
Patent Document 2: Published Japanese Translation No. 2023-508140 of the PCT International Publication
Patent Document 3: PCT International Publication No. WO2016/017132
Patent Document 4: Published Japanese Translation No. 2018-518591 of the PCT International Publication
Patent Document 5: Japanese Unexamined Patent Application, First Publication No. 2017-179233

### SUMMARY OF INVENTION

### Technical Problem

However, in the prior arts including Patent Documents 1 to 5, a phenomenon in which the magnetic characteristics of the electrical steel sheet deteriorate when the adhesion strength of the adhesive coating is increased, has occurred. That is, the adhesion strength and the magnetic characteristics are in a trade-off relationship, and it is difficult to satisfy both. In particular, it is required to ensure the adhesion strength of the adhesive surface-coated electrical steel sheet at a range from ambient temperature to a high temperature.

Therefore, in the adhesive surface-coated electrical steel sheet, further improvements are desired in terms of the adhesion strength at a range from ambient temperature to a high temperature, and the magnetic characteristics.

An object of the present disclosure is to provide an adhesive surface-coated electrical steel sheet having excellent adhesion strength at a range from ambient temperature to a high temperature and excellent magnetic characteristics, a laminated core using the same, and manufacturing methods thereof.

### Solution to Problem

Specific means for solving the problem include the following aspects.
<1> An adhesive surface-coated electrical steel sheet according to an aspect of the present disclosure includes: the electrical steel sheet; and the adhesive coating that is provided on at least a part of one surface or both surfaces of the electrical steel sheet, the adhesive coating including a crosslinkable thermoplastic resin A and a thermoplastic resin B other than the crosslinkable thermoplastic resin A, in which in the adhesive coating, the peak temperature in a logarithmic decrement curve measured by a rigid-body pendulum test is 130°C to 150°C, and a peak ratio P1/P2 of a peak logarithmic decrement P1 in the logarithmic decrement curve after heating at 200°C for 1 minute to a peak logarithmic decrement P2 in the logarithmic decrement curve before the heating is 0.70 to 1.30.
<2> In the adhesive surface-coated electrical steel sheet according to <1>, the P2 may be 0.07 to 0.30.
<3> In the adhesive surface-coated electrical steel sheet according to <1> or <2>, the adhesive coating before the heating may have a pencil hardness of 3H to 4H.
<4> In the adhesive surface-coated electrical steel sheet according to any one of <1> to <3>, the P1 may be 0.05 to 0.25.
<5> In the adhesive surface-coated electrical steel sheet according to any one of <1> to <4>, the adhesive coating after the heating may have a pencil hardness of 5H to 6H.
<6> In the adhesive surface-coated electrical steel sheet according to any one of <1> to <5>, the crosslinkable thermoplastic resin A may be one or more resins selected from the group consisting of a (meth)acrylic resin and a polyester resin.
<7> In a laminated core according to another aspect of the present disclosure, the laminated core includes a plurality of the adhesive surface-coated electrical steel sheets according to any one of <1> to <6>, the adhesive surface-coated electrical steel sheets being laminated, in which the electrical steel sheets are bonded to each other by a cured coating of the adhesive coating.
<8> In the laminated core according to <7>, the laminated core may have a space factor of 96% to 98%.
<9> A manufacturing method for an adhesive surface-coated electrical steel sheet according to another aspect of the present disclosure includes: a coating step of coating at least a part of one surface or both surfaces of an electrical steel sheet with an adhesive coating-forming coating liquid to obtain a coated steel sheet; and a coating film-forming step of heating the coated steel sheet to a drying temperature of 100°C to 200°C at a temperature rising rate of 6.0°C/sec or less, retaining the coated steel sheet within a temperature range between -10°C from the drying temperature and the drying temperature for 10 to 90 seconds, and drying the coated steel sheet, to form an adhesive coating on the surface of the electrical steel sheet.
<10> In the manufacturing method for an adhesive surface-coated electrical steel sheet according to <9>, in the coating step, the adhesive coating-forming coating liquid may contain a crosslinkable thermoplastic resin A and a thermoplastic resin B other than the crosslinkable thermoplastic resin A, and the mass ratio of the crosslinkable thermoplastic resin A to the thermoplastic resin B may be 97/3 to 70/30.
<11> A manufacturing method for a laminated core according to another aspect of the present disclosure includes: a coating step of coating at least a part of one surface or both surfaces of an electrical steel sheet with an adhesive coating-forming coating liquid to obtain a coated steel sheet; a coating film-forming step of heating the coated steel sheet to a drying temperature of 100°C to 200°C at a temperature rising rate of 6.0°C/sec or less, retaining the coated steel sheet within a temperature range between - 10°C from the drying temperature and the drying temperature for 10 to 90 seconds, drying the coated steel sheet, and forming an adhesive coating on the surface of the electrical steel sheet, to obtain an adhesive surface-coated electrical steel sheet; a punching step of punching the adhesive surface-coated electrical steel sheet to obtain a punching member; a laminating step of laminating a plurality of the punching members to obtain a laminated body; and a bonding step of heating the laminated body to a pressurizing temperature within a temperature range of 200°C to 300°C, and retaining the laminated body within a range between -10°C from the pressurizing temperature and the pressurizing temperature for 1 to 60 minutes while applying a pressurizing force of 0.5 to 10 MPa.

### Advantageous Effects of Invention

According to the above-described aspects of the present disclosure, provided are the adhesive surface-coated electrical steel sheet having excellent adhesion strength at a range from ambient temperature to a high temperature and excellent magnetic characteristics, the laminated core using the same, and the manufacturing methods thereof.

### BRIEF DESCRIPTION OF DRAWINGS

[FIG. 1] A schematic diagram illustrating an example of an adhesive surface-coated electrical steel sheet according to the present disclosure.
[FIG. 2] A schematic diagram illustrating an example of a laminated core of the present disclosure.

### DESCRIPTION OF EMBODIMENTS

Hereinafter, the present disclosure will be described.

Although the description of the requirements described below may be made based on representative embodiments of the present disclosure, the present disclosure is not limited to such embodiments and can be implemented with appropriate modifications within the scope of the object of the present disclosure.

In the present disclosure, a numerical value range indicated by using "to" means a range including the numerical values described before and after "to" as a lower limit and an upper limit, respectively.

In the numerical value ranges described in a stepwise manner in the present disclosure, an upper limit or a lower limit described in a certain numerical value range may be replaced with an upper limit or a lower limit of another stepwise-described numerical value range. In addition, in the numerical value ranges described in the present disclosure, the upper limit or lower limit described in a certain numerical value range may be replaced with a value indicated in Examples.

In the present disclosure, a combination of two or more preferable aspects is a more preferable aspect.

In the present disclosure, in a case where a plurality of substances corresponding to components are present in an adhesive coating-forming coating liquid, the amount of each component in the adhesive coating-forming coating liquid means the total amount of the plurality of substances present in the adhesive coating-forming coating liquid, unless otherwise specified.

In the present disclosure, "mass%" and "weight%" are synonymous, and "part(s) by mass" and "part(s) by weight" are synonymous.

### [Adhesive surface-coated electrical steel sheet]

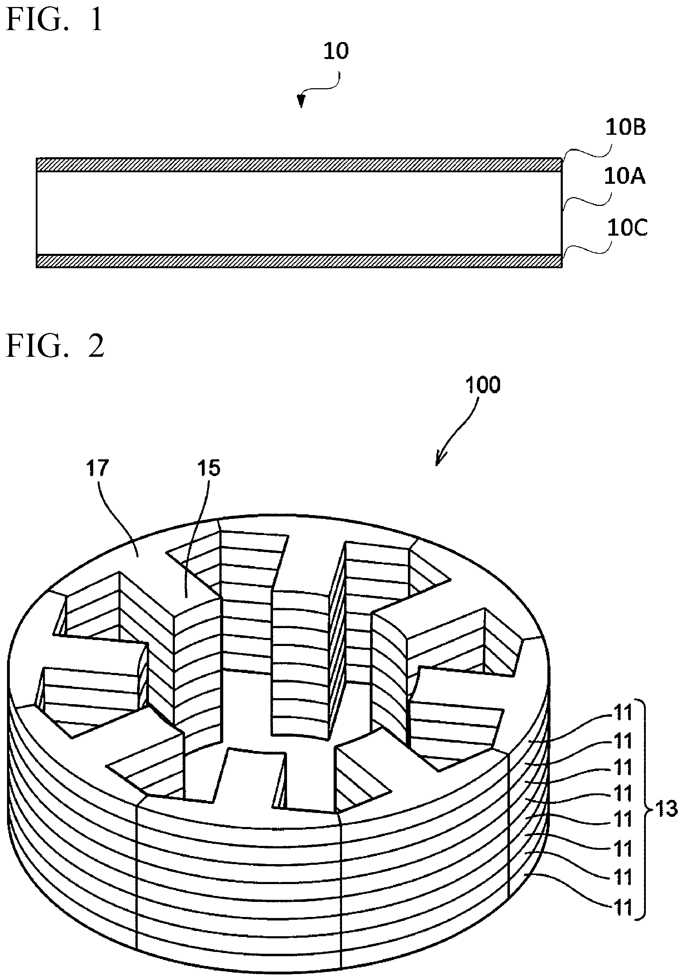

An adhesive surface-coated electrical steel sheet of the present disclosure includes the electrical steel sheet and the adhesive coating provided on at least a part of one surface or both surfaces of the electrical steel sheet (see FIG. 1).

The adhesive coating contains a crosslinkable thermoplastic resin A derived from an adhesive coating-forming coating liquid, and a thermoplastic resin B other than the crosslinkable thermoplastic resin A.

In addition, in the adhesive coating, the peak temperature on a logarithmic decrement curve measured by a rigid-body pendulum test is 130°C to 150°C, and a peak ratio (P1/P2) of a peak logarithmic decrement P1 in the logarithmic decrement curve after heating at 200°C for 1 minute to a peak logarithmic decrement P2 in the logarithmic decrement curve before the heating is 0.70 to 1.30.

Here, in FIG. 1, reference numeral 10 denotes an adhesive surface-coated electrical steel sheet, reference numeral 10A denotes an electrical steel sheet, and reference numerals 10B and 10C each denote an adhesive coating.

According to the above-described configuration, the adhesive surface-coated electrical steel sheet of the present disclosure exhibits excellent adhesion strength at a range from ambient temperature (25°C) to a high temperature (150°C), and excellent magnetic characteristics (excellent magnetic characteristics as a laminated core).

The reason is presumed as follows. Since a crosslinkable thermoplastic resin A having a self-crosslinking group is applied, the rigidity of molecular chains is enhanced, thereby providing excellent adhesion strength at a range from ambient temperature to a high temperature. In addition, since the thermoplastic resin B is applied and the logarithmic decrement is set within the above-described range, compressive stress is relaxed, thereby providing excellent magnetic characteristics.

Hereinafter, the adhesive surface-coated electrical steel sheet of the present disclosure will be described in detail.

### (Electrical Steel Sheet)

The electrical steel sheet is a steel sheet on which an adhesive coating is to be formed, and is not particularly limited.

The electrical steel sheet may be a non-oriented electrical steel sheet or may be a grain-oriented electrical steel sheet.

Specifically, as the electrical steel sheet, for example, it is possible to use a non-oriented electrical steel sheet as defined in JIS C 2552:2014, a grain-oriented electrical steel sheet as defined in JIS C 2553:2019, or a non-oriented or grain-oriented thin electrical steel sheet as defined in JIS C 2558:2021.

### (Adhesive coating)

The adhesive coating is provided on at least a part of one surface or both surfaces of the surface of the electrical steel sheet (see FIG. 1). That is, the adhesive coating may be provided, for example, on the entirety of one surface or each of both surfaces of the electrical steel sheet, or may be provided in a patterned manner, such as a staggered arrangement, on one surface or each of both surfaces of the electrical steel sheet.

However, the adhesive coating is preferably provided at 60% or more, 80% or more, or 100% (in terms of area fraction) with respect to the area of one surface of the electrical steel sheet.

### [Logarithmic Decrement Curve]

### -Peak Temperature of Logarithmic Decrement-

The peak temperature of the adhesive coating on a logarithmic decrement curve measured by a rigid-body pendulum test is 130°C to 150°C.

When the peak temperature in the logarithmic decrement curve is lower than 130°C, the adhesion strength decreases.

When the peak temperature in the logarithmic decrement curve is higher than 150°C, the adhesion strength excessively increases, and the adhesive coating becomes too hard, leading to a deterioration in magnetic characteristics.

Therefore, the peak temperature of the logarithmic decrement is within the above-described range. The peak temperature of the logarithmic decrement is preferably 130°C to 145°C, and more preferably 130°C to 140°C.

Here, the peak temperature in the logarithmic decrement curve refers to a temperature at which a logarithmic decrement exhibits an absolute maximum value on a logarithmic decrement curve representing the relationship between temperature and logarithmic decrement.

### -Peak Ratio (P1/P2)-

In the adhesive coating, a peak ratio (P1/P2) of a peak logarithmic decrement P1 in the logarithmic decrement curve after heating at 200°C for 1 minute to a peak logarithmic decrement P2 in the logarithmic decrement curve before the heating is 0.70 to 1.30.

When the peak ratio (P1/P2) is less than 0.70, the adhesion strength excessively increases, and the adhesive coating becomes too hard, leading to a deterioration in magnetic characteristics.

When the peak ratio (P1/P2) is more than 1.30, the adhesion strength decreases.

Therefore, the peak ratio (P1/P2) is within the above-described range. The peak ratio (P1/P2) is preferably 0.80 to 1.20, and more preferably 0.90 to 1.10.

Here, the peak logarithmic decrement in the logarithmic decrement curve refers to the maximum logarithmic decrement in a logarithmic decrement curve indicating the relationship between the temperature and the logarithmic decrement.

### -P1 and P2-

In the adhesive coating, the peak logarithmic decrement P1 in the logarithmic decrement curve before heating is preferably 0.07 to 0.30.

When P1 is less than 0.07, the adhesive coating fails to soften during thermocompression bonding, leading to a decrease in adhesion strength. When P1 is more than 0.30, blocking (adhesion due to self-weight during coil transportation) is prone to occur.

In addition, in the adhesive coating, the peak logarithmic decrement P2 in the logarithmic decrement curve after the heating at 200°C for 1 minute is preferably 0.05 to 0.25.

When P2 is less than 0.05, the adhesive coating becomes too hard, and the magnetic characteristics deteriorate. When P2 is more than 0.25, the adhesion strength decreases.

The peak temperature, P1, P2, and the peak ratio (P1/P2) in the logarithmic decrement curve can be adjusted depending on the types and mass ratios of the crosslinkable thermoplastic resin A and the thermoplastic resin B.

In addition, the peak temperature and the peak ratio (P1/P2) in the logarithmic decrement curve can also be adjusted by the types and amounts of a crosslinking agent described later, and coating film formation conditions.

### -Method for Measuring Peak Temperature and Peak Logarithmic Decrement-

The peak temperature of logarithmic decrement and peak logarithmic decrement are measured using a rigid-body pendulum type physical properties testing instrument in accordance with the rigid-body pendulum test specified in ISO 12013-2:2012. Specifically, measurement is performed as follows.

A test piece having a size of 20 mm × 60 mm is collected from the adhesive surface-coated electrical steel sheet to be measured.

The test piece is placed on the heating/cooling block of the rigid-body pendulum type physical properties testing instrument. In addition, a cylinder edge (pendulum) is placed on a surface (measurement surface) of the adhesive coating of the test piece.

Then, using the rigid-body pendulum type physical properties testing instrument, the test piece is heated under conditions of a rise temperature from room temperature to 300°C and a temperature rising rate of 10°C/min, and a free vibration period and a vibration amplitude of the pendulum are measured. Here, the condition of the temperature rising rate of 10°C/min means that the temperature is measured one or more times every 6.0 seconds, and that the temperature rising rate, when calculated over any 30-second period, is always 10°C/min.

Next, the free vibration period and the vibration amplitude of the pendulum are analyzed to obtain a logarithmic decrement for each measurement temperature, and the logarithmic decrement with respect to the measurement temperature is plotted to obtain a logarithmic decrement curve.

In addition, apparatuses and conditions used for the measurement are as follows.
Testing machine: Rigid-body pendulum type physical properties testing instrument, model RPT-3000W, manufactured by A&D Company, Limited.
Rigid-body pendulum: FRB-100
Edge: RBP-020
Measurement interval: 6.0 seconds
Adsorption time: 2.0 seconds

Then, the maximum logarithmic decrement in the logarithmic decrement curve is determined. The obtained maximum logarithmic decrement is defined as the peak value P2 in the logarithmic decrement curve before the heating.

In addition, the temperature at which a logarithmic decrement exhibits an absolute maximum value in the logarithmic decrement curve is determined as the peak temperature of the logarithmic decrement.

The measurement is performed five times or more, and the peak value and the peak temperature are each defined as an average value of the measurements.

On the other hand, the measurement of the peak logarithmic decrement P1 in the logarithmic decrement curve after the heating is performed as follows.

A test piece having a size of 20 mm × 60 mm is collected from the adhesive surface-coated electrical steel sheet to be measured.

The test piece is heated under conditions of a steel sheet surface temperature of 200°C and a heating time of 1 minute. After the heating, the test piece is cooled to room temperature (25°C).

Next, in the same manner as the measurement of P2, a rigid-body pendulum test is performed on the test piece to obtain a logarithmic decrement curve.

Then, the maximum logarithmic decrement in the logarithmic decrement curve is determined. The obtained maximum logarithmic decrement is defined as the peak logarithmic decrement P1 in the logarithmic decrement curve after the heating at 200°C for 1 minute.

### [Pencil Hardness]

The adhesive coating preferably has a pencil hardness of 3H to 4H. Within this range, both thermocompression bonding characteristics and blocking resistance can be achieved.

In addition, the adhesive coating preferably has a pencil hardness of 5H to 6H after the heating at 200°C for 1 minute. Within this range, both adhesion strength and magnetic characteristics can be achieved.

The pencil hardness is measured by a method in accordance with JISK 5600-5-4:1999.

### [Average Thickness of Adhesive coating]

The adhesive coating preferably has an average thickness of 1.0 to 6.0 µm, and more preferably 1.5 to 3.0 µm.

Even in a case where the adhesive coating is thinned in such a manner that the average thickness falls within the above-described range, the adhesive surface-coated electrical steel sheet of the present disclosure exhibits excellent adhesion strength and excellent magnetic characteristics.

The method for measuring the average thickness of the adhesive coating is as follows.

The adhesive surface-coated electrical steel sheet to be measured is cut along the thickness direction to obtain a test piece in which a cut surface is an observed section.

The observed section of the test piece is observed by a scanning electron microscope (SEM), and the thicknesses of the adhesive coating at any three locations are measured. Then, the average thickness of the adhesive coating is obtained by arithmetically averaging the thicknesses of the adhesive coating at the three locations.

### [Components of Adhesive coating]

The adhesive coating contains a crosslinkable thermoplastic resin A, and a thermoplastic resin B other than the crosslinkable thermoplastic resin A.

In other words, the adhesive coating is an insulating coating film that undergoes curing through at least the crosslinking of the crosslinkable thermoplastic resin A upon heating and pressing, thereby exhibiting adhesiveness.

### -Crosslinkable Thermoplastic Resin A-

The crosslinkable thermoplastic resin A is a thermoplastic resin having a crosslinking group.

The crosslinkable thermoplastic resin A is preferably a water-insoluble resin from the viewpoint of ensuring heat resistance. Here, the water-insoluble resin refers to a resin that does not dissolve in water or has low solubility in water. Specifically, the water-insoluble resin refers to a resin having a solubility in water at 25°C of less than 5 g (for example, 1 g or less) per 100 g of water.

The adhesive coating may contain only one kind of the crosslinkable thermoplastic resin A, or may contain two or more kinds thereof.

In the crosslinkable thermoplastic resin A, the crosslinking group may be a crosslinking group having a property capable of crosslinking even in the absence of a crosslinking agent (that is, a self-crosslinking group in which the crosslinking groups react with each other to crosslink), or may be a crosslinking group having a property capable of crosslinking by reacting with a crosslinking agent. The crosslinking group is preferably a group capable of developing crosslinkability by heating.

Specific examples of the crosslinking group include an N-methylol group, an N-butyrol group, a glycidyl group, an alkoxymethylamide group, an alkoxysilyl group, a hydroxyl group, a phenolic hydroxyl group, a carboxyl group, a thiol group, and an amino group.

The crosslinkable thermoplastic resin A may be either a vinyl-based thermoplastic resin or a non-vinyl-based thermoplastic resin.

Examples of the non-vinyl-based thermoplastic resin include non-vinyl-based resins such as a polyester resin, a polyurethane resin, a polyamide resin, and a phenoxy resin.

Examples of the vinyl-based thermoplastic resin include a homopolymer of a monomer such as a styrene-based monomer (for example, styrene, parachlorostyrene, α-methylstyrene, and the like), a (meth)acrylic acid-based monomer (for example, (meth)acrylic acid, a (meth)acrylic acid alkyl ester, and the like), and an olefin-based monomer (for example, ethylene, propylene, butadiene, and the like), or a copolymer in which two or more kinds of these monomers are combined.

Here, the "styrene-based monomer" refers to a monomer having a styrene skeleton (a structure in which one hydrogen atom among six hydrogen atoms of benzene is substituted with a vinyl group).

In addition, a "styrene-based resin" refers to a resin in which a proportion of a configurational unit derived from the styrene-based monomer is 50 mass% or more with respect to all configurational units.

In addition, the "(meth)acrylic acid-based monomer" refers to a monomer having a (meth)acryloyl group.

In addition, the "(meth)acrylic acid-based monomer" refers to a resin in which a proportion of a configurational unit derived from a (meth)acrylic acid-based monomer is 50 mass% or more with respect to all configurational units.

"(Meth)acrylic" is a term that includes both "acrylic" and "methacrylic".

In addition, the "olefin-based monomer" refers to a monomer that is composed of at least three carbon atoms and has an olefin skeleton having a carbon-carbon double bond.

In addition, the "olefin-based monomer" refers to a resin in which a proportion of a configurational unit derived from an olefin-based monomer is 50 mass% or more with respect to all configurational units.

Among these, from the viewpoint of improving adhesion strength and magnetic characteristics, the crosslinkable thermoplastic resin A is preferably a (meth)acrylic resin or a polyester resin.

### -Amount of Crosslinkable Thermoplastic Resin A-

The amount of the crosslinkable thermoplastic resin A is preferably 70 mass% to 97 mass%, more preferably 75 mass% to 95 mass%, and still more preferably 80 mass% to 93 mass%, with respect to the adhesive coating.

### -Thermoplastic Resin B-

The thermoplastic resin B is a thermoplastic resin other than the crosslinkable thermoplastic resin A.

The thermoplastic resin B is preferably a water-soluble resin from the viewpoint of securing coatability. Here, the water-soluble resin refers to a resin having a solubility in water at 25°C of 5 g or more per 100 g of water.

The adhesive coating may contain only one kind of the thermoplastic resin B, or may contain two or more kinds thereof.

The thermoplastic resin B may be either a vinyl-based thermoplastic resin or a non-vinyl-based thermoplastic resin.

Examples of the non-vinyl-based thermoplastic resin include the non-vinyl-based resins exemplified for the crosslinkable thermoplastic resin A.

Examples of the vinyl-based thermoplastic resin include the vinyl-based resins exemplified for the crosslinkable thermoplastic resin A.

Among these, from the viewpoint of improving adhesion strength and magnetic characteristics, the thermoplastic resin B is preferably a (meth)acrylic resin or a polyester resin.

Here, the thermoplastic resin B may be a crosslinkable thermoplastic resin or may be a non-crosslinkable thermoplastic resin, but from the viewpoint of improving adhesion strength and magnetic characteristics, the thermoplastic resin B is preferably a non-crosslinkable thermoplastic resin.

Examples of the non-crosslinkable thermoplastic resin include a vinyl-based thermoplastic resin and a non-vinyl-based thermoplastic resin that do not have the crosslinking groups exemplified for the crosslinkable thermoplastic resin A.

### -Amount of Thermoplastic Resin B-

The thermoplastic resin B is preferably contained in the adhesive coating in a predetermined amount with respect to the crosslinkable thermoplastic resin A. Specifically, the mass ratio of the crosslinkable thermoplastic resin A to the thermoplastic resin B (amount of the crosslinkable thermoplastic resin A/amount of the thermoplastic resin B) is preferably 97/3 to 70/30 (A: B = 97 : 3 to 70 : 30), more preferably 95/5 to 85/15, and still more preferably 95/5 to 90/10.

**In** a case where the mass ratio of the crosslinkable thermoplastic resin A to the thermoplastic resin B is 97/3 to 70/30, both the adhesion strength and the magnetic characteristics are more excellent.

### -Other Component-

The adhesive coating may contain a component in addition to the above-described components (so-called "other component"), as necessary, within a range that does not impair the effects thereof.

**In** particular, the adhesive coating may contain a crosslinking agent. The crosslinking agent is a particularly preferred component because the crosslinking agent affects both the adhesion strength and the magnetic characteristics.

Examples of the crosslinking agent include a thermosetting resin, and specific examples thereof include a polymer crosslinking agent such as an epoxy resin, a phenolic resin, and an amino resin (for example, a melamine resin and a guanamine resin).

Examples of the crosslinking agent also include a low-molecular-weight crosslinking agent composed of a monomer or an oligomer such as an isocyanate compound, a polyol compound, an epoxy compound, a phenolic compound, and an amino compound (such as a melamine compound and a guanamine compound).

The amount of the crosslinking agent is preferably 1 to 20 mass%, and more preferably 1 to 10 mass%, with respect to the adhesive coating.

The adhesive coating may contain only one kind of the crosslinking agent, or may contain two or more kinds thereof.

### -Component Analysis-

Regarding the adhesive coating in the adhesive surface-coated electrical steel sheet or the laminated core obtained by laminating the adhesive surface-coated electrical steel sheets, the component ratio can be estimated by performing qualitative analysis of the contained components using infrared spectroscopy, nuclear magnetic resonance, or gas chromatography, and then performing weight distribution of fragments by TOFMS.

An analytical sample of the adhesive surface-coated electrical steel sheet can be collected by cutting out the coating portion with a precision cutter. **In** addition, in the case of the laminated core, several electrical steel sheets are peeled off from the laminated core, and a sample is then collected by the above-described method.

### (Manufacturing Method for Adhesive surface-coated electrical steel sheet)

The adhesive surface-coated electrical steel sheet of the present disclosure exhibits the effects thereof as long as it has the above-described features regardless of the manufacturing method, and can be obtained, for example, by a manufacturing method including the following steps:
(I) a coating step of coating at least a part of one surface or both surfaces of a surface of an electrical steel sheet with an adhesive coating-forming coating liquid to obtain a coated steel sheet; and
(II) a coating film-forming step of heating the coated steel sheet to a drying temperature of 100°C to 200°C at a temperature rising rate of 6.0°C/sec or less, retaining the coated steel sheet within a temperature range between -10°C from the drying temperature and the drying temperature for 10 to 90 seconds, and drying the coated steel sheet, to form an adhesive coating on the surface of the electrical steel sheet.

Each step will be described.

### -Coating Step-

In the coating step, a coated steel sheet is obtained by coating at least a part of one surface or both surfaces of an electrical steel sheet with an adhesive coating-forming coating liquid (hereinafter, also referred to as a "coating liquid of the present disclosure").

The coating liquid of the present disclosure includes, for example, particles constituting the crosslinkable thermoplastic resin A (hereinafter, also referred to as "crosslinkable thermoplastic resin particles A"), the thermoplastic resin B, and a medium containing water.

In the coating liquid of the present disclosure, the crosslinkable thermoplastic resin particles A are present in a state of being dispersed in the medium containing water. The thermoplastic resin B is present in a state of being dissolved in the medium containing water.

By coating with such a coating liquid and then drying, the adhesive coating including the crosslinkable thermoplastic resin A and the thermoplastic resin B can be obtained.

In the coating liquid of the present disclosure, the mass ratio of the crosslinkable thermoplastic resin A to the thermoplastic resin B is preferably 97/3 to 70/30. By blending in this manner, even in the adhesive coating to be formed, the mass ratio of the crosslinkable thermoplastic resin A to the thermoplastic resin B is 97/3 to 70/30.

Here, the type of water is not particularly limited.

As the water, for example, distilled water, deionized water (also referred to as "ion-exchanged water"), and pure water are preferable from the viewpoint of containing fewer impurities.

The amount of water is preferably 35 mass% to 50 mass%, and more preferably 40 mass% to 45 mass%, with respect to the total mass of the coating liquid.

The coating liquid of the present disclosure may contain a component in addition to the above-described components (so-called "other component"), as necessary, within a range that does not impair the effects thereof.

Examples of the other component include an aqueous medium other than water.

Examples of the aqueous medium other than water include a water-miscible organic solvent.

Examples of the water-miscible organic solvent include organic solvents such as monohydric alcohol compounds such as methanol and ethanol; polyhydric alcohol compounds such as glycerin, ethylene glycol, and propylene glycol; and glycol derivatives such as ethylene glycol monoethyl ether and propylene glycol monobutyl ether.

In addition, examples of the other component include various additives such as a preservative, a wetting agent, and an antifoaming agent.

The coating liquid of the present disclosure is obtained, for example, by mixing a dispersion liquid of the crosslinkable thermoplastic resin particles A and an aqueous solution of the thermoplastic resin B.

Examples of the mixing method include a mixing method with stirring.

For the stirring, a general stirring tool or a general stirring apparatus can be used.

The stirring temperature is not particularly limited, but is preferably, for example, 20°C to 30°C.

Examples of the formation of the adhesive coating using the coating liquid of the present disclosure include a method of coating a surface of an electrical steel sheet with the coating liquid by a well-known coating method such as a roll coater method or a spray method, and then carrying out drying.

The solid content concentration of the coating liquid is preferably 5 to 40 mass%, and more preferably 10 to 25 mass%.

### -Coating Film-Forming Step-

In a coating film forming step, the electrical steel sheet coated with the coating liquid (coated steel sheet) is heated at a temperature rising rate of 6.0°C/sec or lower to a drying temperature (maximum attainment temperature of the material) of 100°C to 200°C, and retained within a temperature range between (drying temperature - 10°C) and the drying temperature for 10 to 90 seconds, thereby carrying out drying, to form an adhesive coating on a surface of the electrical steel sheet.

The drying time (the time during which the material temperature is held within a temperature range between -10°C from the drying temperature and the drying temperature) is preferably 30 to 90 seconds. The temperature rising rate is an average temperature rising rate calculated from the time taken from 50°C to the drying temperature.

When the drying temperature is higher than 200°C, there is a concern that the resin may be oxidized. When the drying temperature is lower than 100°C or the drying time is shorter than 10 seconds, drying is not sufficiently carried out.

When the drying time is longer than 90 seconds, it is disadvantageous in terms of productivity.

When the temperature rising rate is more than 6.0°C/sec, the film is not suitably formed, resulting in insufficient adhesion strength. In general, when the temperature rising rate is lowered, it is considered that it is necessary to increase the furnace length or reduce the line speed, which is not preferable in terms of equipment restriction and productivity. However, in the manufacturing method for an adhesive surface-coated electrical steel sheet according to the present embodiment, the temperature rising rate is intentionally lowered based on a new finding that the above-described effects can be obtained by lowering the temperature rising rate.

The drying method is preferably a method utilizing a duplicate-type heating furnace, but may be a hot-blast furnace method or other methods.

### (Laminated Core)

The laminated core of the present disclosure includes a plurality of the adhesive surface-coated electrical steel sheets of the present disclosure, the adhesive surface-coated electrical steel sheets are laminated, and the electrical steel sheets are bonded to each other by a cured coating of the adhesive coating.

Here, the cured coating of the adhesive coating is a film in which crosslinking of the crosslinkable thermoplastic resin A in the adhesive coating proceeds, followed by curing to develop adhesiveness.

Specifically, examples of the laminated core of the present disclosure include a laminated core obtained by punching the electrical steel sheets of the present disclosure to produce punching members, and laminating and integrating the punching members through heating and pressing.

The laminated core of the present disclosure preferably has a space factor of 96% to 98%.

**In** the case of carrying out the manufacturing using the adhesive surface-coated electrical steel sheet of the present disclosure, high adhesion strength can be obtained even though an adhesion layer is made thin. Thus, it is possible to obtain the space factor within the above-described range.

FIG. 2 is a schematic diagram illustrating an example of a laminated core of the present disclosure. As illustrated in FIG. 2, a laminated core 100 is formed as a laminated body 13 in which eight punching members 11, each formed of the adhesive surface-coated electrical steel sheet, are connected in a ring shape, and the punching members 11 connected in the ring shape are laminated into eight layers and integrated.

The punching members 11, each formed of the adhesive surface-coated electrical steel sheet, are obtained by subjecting the adhesive surface-coated electrical steel sheets to punch processing, and include an arcuate yoke portion 17 and a tooth portion 15 that protrudes radially inward from the inner circumferential surface of the yoke portion 17.

The laminated core 100 is not limited to the shape, number of pieces, or number of laminated layers of the punching members 11 forming the laminated core 100 illustrated in FIG. 2, and is only sufficient to be designed depending on the intended purpose.

The laminated core of the present disclosure is manufactured, for example, by a manufacturing method including the following steps:
(III) a punching step of punching the adhesive surface-coated electrical steel sheet of the present disclosure to obtain a punching member;
(IV) a laminating step of laminating a plurality of the punching members to obtain a laminated body; and
(V) a bonding step of heating the laminated body to a pressurizing temperature within a temperature range of 200°C to 300°C, and retaining the laminated body within a range between -10°C from the pressurizing temperature and the pressurizing temperature for 1 to 60 minutes while applying a pressurizing force of 0.5 to 10 MPa.

Each step will be described.

### -Punching Step-

In the punching step, an adhesive surface-coated electrical steel sheet is punched to obtain a member (punching member) having a predetermined shape. The punching method is not particularly limited.

### -Laminating Step-

In the laminating step, the punching members are laminated with an adhesive coating sandwiched between the electrical steel sheets. Thus, a laminated body is obtained.

### -Bonding Step-

In the bonding step, the laminated body is heated to a pressurizing temperature (maximum attainment temperature of the material) within a temperature range of 200°C to 300°C, and retained within a range between -10°C from the pressurizing temperature and the pressurizing temperature for 1 to 60 minutes while applying a pressurizing force of 0.5 to 10 MPa. Accordingly, the crosslinking of the crosslinkable thermoplastic resin A in the adhesive coating proceeds, thereby curing the adhesive coating. As a result, the cured coating of the adhesive coating develops adhesiveness, and the electrical steel sheets are bonded to each other by the cured coating of the adhesive coating, thereby obtaining a laminated core.

In the adhesive surface-coated electrical steel sheets, the electrical steel sheets may be bonded to each other in such a manner that the cured coatings of the adhesive coatings of the electrical steel sheets face and adhere to each other, or in such a manner that the cured coating of the adhesive coating on one electrical steel sheet faces and adheres to a surface of another electrical steel sheet on which no adhesive coating is formed.

When the pressurizing temperature is lower than 200°C, curing is insufficient, and when the pressurizing temperature is higher than 300°C, the resin is oxidized.

When the pressurizing force is less than 0.5 MPa, unbonded portions are likely to be formed, and when the pressurizing force is more than 10 MPa, strain is applied to the steel sheet.

When the holding time (the time during which the material temperature is held within a temperature range between -10°C from the pressurizing temperature and the pressurizing temperature) is shorter than 1 minute, curing is insufficient, and when the holding time is longer than 60 minutes, productivity is inferior. In a case where the number of laminated sheets is large or the like, the holding time is preferably 5 minutes or longer and more preferably 30 minutes or longer in such a manner that heating is performed uniformly.

### (Application of Laminated Core)

The laminated core of the present disclosure can be used as a core employed in a rotary electric machine and the like.

### Examples

Hereinafter, the coating liquid of the present disclosure will be described in more detail with reference to examples. The present disclosure is not limited to the following examples, as long as the spirit does not depart from the gist of the disclosure.

### [Examples 1 to 8 and Comparative Examples 1 to 9]

### 1. Production of Coating Liquid

An aqueous dispersion of particles of the crosslinkable thermoplastic resin A, an aqueous solution of the thermoplastic resin B, and a crosslinking agent, each having the type and amount (parts (parts by mass)) illustrated in Table 1, were mixed to prepare a coating liquid having a solid content concentration of 40 mass%.

Note that the amounts (parts) of the crosslinkable thermoplastic resin A, the thermoplastic resin B, and the crosslinking agent in the coating liquid are as illustrated in Table 1.

Here, the "solid content concentration" refers to the total mass ratio of the crosslinkable thermoplastic resin A, the aqueous solution of the thermoplastic resin B, and the crosslinking agent in the coating liquid.

In Examples 5 to 7 and Comparative Examples 2 and 10, coating liquids containing the crosslinkable thermoplastic resin A, the thermoplastic resin B, and the crosslinking agent were obtained.

In Examples 1 to 4 and 8 and Comparative Examples 3 to 4 and 9, coating liquids containing no crosslinking agent were obtained.

In Comparative Example 1, a coating liquid containing no thermoplastic resin B was obtained.

In Comparative Example 5, a coating liquid containing no crosslinkable thermoplastic resin A and no crosslinking agent was obtained.

In Comparative Example 6, a coating liquid containing no thermoplastic resin B and no crosslinking agent was obtained.

In Comparative Examples 7 and 8, coating liquids containing no crosslinkable thermoplastic resin A were obtained.

Details of the used materials described in Table 1 are as follows.

### <Crosslinkable Thermoplastic Resin A>

Crosslinkable acrylic resin (1): Crosslinking group = N-methylol group weight-average molecular weight: 180,000
Crosslinkable acrylic resin (2): Crosslinking group = glycidyl group weight-average molecular weight: 150,000
Crosslinkable acrylic resin (3): Crosslinking group = carboxyl group weight-average molecular weight: 300,000
Crosslinkable acrylic resin (4): Crosslinking group = amino group weight-average molecular weight: 80,000
Crosslinkable polyester (5): Crosslinking group = hydroxyl group weight-average molecular weight: 30,000
Crosslinkable polyester (6): Crosslinking group = carboxyl group weight-average molecular weight: 120,000

### <Thermoplastic Resin B>

Acrylic resin weight-average molecular weight: 50,000
Polyester resin weight-average molecular weight: 160,000
Polyurethane resin weight-average molecular weight: 20,000
Phenoxy resin weight-average molecular weight: 100,000

### <Crosslinking Agent>

Epoxy resin: Bisphenol A type, weight-average molecular weight: 1,000 to 4,000
Phenol resin: Novolac type, weight-average molecular weight: 3,000 to 5,000
Amino resin: Methylated benzoguanamine, weight-average molecular weight: 5,000 to 8,000

In Table 1, the unit of the numerical values described in the columns of the crosslinkable thermoplastic resin A, the thermoplastic resin B, and the crosslinking agent indicates parts by mass, and blanks described in the columns of the crosslinkable thermoplastic resin A, the thermoplastic resin B, and the crosslinking agent indicate that the material corresponding to the column is not used.

### [Table 1]

**Table 1**

| | | Example 1 | Example 2 | Example 3 | Example 4 | Example 5 | Example 6 | Example 7 | Example 8 |
|---|---|---|---|---|---|---|---|---|---|
| Crosslinkable thermoplastic resin A | Crosslinkable acrylic resin (1) | 80 | | | | | | 70 | |
| | Crosslinkable acrylic resin (2) | | 90 | | | | | | 97 |
| | Crosslinkable acrylic resin (3) | | | 70 | | | | | |
| | Crosslinkable acrylic resin (4) | | | | 70 | | | | |
| | Crosslinkable polyester resin (5) | | | | | 70 | | | |
| | Crosslinkable polyester resin (6) | | | | | | 70 | | |
| Thermoplastic resin B | Acrylic resin | 20 | | 30 | | | | | 3 |
| | Polyester | | | | | 20 | 20 | | |
| | Polyurethane | | | | 30 | | | | |
| | Phenoxy resin | | 10 | | | | | 25 | |
| Crosslinking agent | Epoxy resin | | | | | 10 | 10 | | |
| | Phenol resin | | | | | | | | |
| | Amino resin | | | | | | | 5 | |
| Mass ratio of A: B | | 80:20 | 90:10 | 70:30 | 70:30 | 70:20 | 70:20 | 70:25 | 97:3 |
| Drying temperature | °C | 170 | 150 | 170 | 170 | 140 | 140 | 150 | 170 |
| Drying time | Seconds | 90 | 60 | 90 | 90 | 60 | 60 | 60 | 90 |
| Temperature rising rate | °C/sec | 3.0 | 5.0 | 4.5 | 3.5 | 5.0 | 4.0 | 5.0 | 3.0 |
| Film thickness of adhesive coating | [µm] | 2.0 | 1.5 | 2.2 | 1.8 | 2.5 | 2.5 | 3.1 | 1.5 |

**Table 1 (continued)**

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 |
|---|---|---|---|---|---|---|---|---|---|---|---|
| Crosslinkable thermoplastic resin A | Crosslinkable acrylic resin (1) | | | | | | 100 | | | | |
| | Crosslinkable acrylic resin (2) | 50 | 40 | | | | | | | 10 | |
| | Crosslinkable acrylic resin (3) | | 5 | 10 | | | | | | | |
| | Crosslinkable acrylic resin (4) | | | | 45 | | | | | | |
| | Crosslinkable polyester resin (5) | | | | | | | | | | 90 |
| | Crosslinkable polyester resin (6) | | | | | | | | | | |
| Thermoplastic resin B | Acrylic resin | | 25 | 90 | | | | 20 | 30 | 90 | 10 |
| | Polyester | | | | | 100 | | | | | |
| | Polyurethane | | | | 5 | | | | | | |
| | Phenoxy resin | | | | 55 | | | | | | |
| Crosslinking agent | Epoxy resin | 40 | | | | | | 75 | 70 | | 30 |
| | Phenol resin | 10 | | | | | | 5 | | | |
| | Amino resin | | 55 | | | | | | | | |
| Mass ratio of A: B | | - | 45:25 | 10:90 | 45:55 | - | - | - | - | 10:90 | 90:10 |
| Drying temperature | °C | 150 | 150 | 170 | 170 | 150 | 170 | 150 | 160 | 150 | 230 |
| Drying time | Seconds | 60 | 60 | 90 | 90 | 60 | 90 | 75 | 90 | 60 | 60 |
| Temperature rising rate | °C/sec | 5.0 | 5.0 | 3.0 | 4.0 | 5.0 | 3.5 | 4.5 | 5.0 | 5.5 | 10.0 |
| Film thickness of adhesive coating | [µm] | 2.0 | 2.0 | 2.0 | 2.0 | 2.0 | 2.0 | 8.0 | 8.0 | 2.0 | 2.0 |

### 2. Production of Adhesive surface-coated electrical steel sheet

A non-oriented electrical steel sheet having a thickness of 0.25 mm and a width of 100 mm was prepared, with compositions of Si: 3.0 mass%, Mn: 0.2 mass%, Al: 0.5 mass%, and a remainder of Fe and impurities.

Next, the coating liquid obtained in section 1. was applied over the entirety of one surface of the electrical steel sheet, and the coating liquid was dried by heating at a drying temperature, a drying time, and a temperature rising rate illustrated in Table 1 to form an adhesive coating having a thickness illustrated in Table 1.

In this way, an adhesive surface-coated electrical steel sheet was obtained.

### [Evaluation]

### (Logarithmic Decrement Curve)

For the adhesive surface-coated electrical steel sheet in each example, the peak temperature in a logarithmic decrement curve measured by a rigid-body pendulum test of the adhesive coating, a peak logarithmic decrement P1 in the logarithmic decrement curve after heating at 200°C for 1 minute, a peak value P2 in the logarithmic decrement curve before the heating, and a peak ratio (P1/P2) of P1 to P2 were each measured according to the aforementioned method.

### (Pencil Hardness)

For the adhesive surface-coated electrical steel sheet in each example, a pencil hardness of the adhesive coating after heating at 200°C for 1 minute and a pencil hardness before the heating were measured by a method in accordance with JISK 5600-5-4:1999.

### (Adhesion Strength)

Two single-sheet test pieces each having a size of 30 mm × 60 mm were cut out from the adhesive surface-coated electrical steel sheet of each example. The 30 mm × 10 mm end portions of the two single-sheet test pieces were overlapped with each other in such a manner that the adhesive coatings faced each other to obtain a laminated body. The laminated body was heated and pressurized under conditions of a pressurizing temperature: 250°C, a pressure: 2 MPa, and a holding (heating and pressing) time: 1 minute to obtain a laminated body sample for measuring adhesion strength.

The shear adhesion strength was measured, with the steel sheet temperature at ambient temperature (25°C), as follows. The sample for adhesion strength measurement was attached to a tension tester, and the shear adhesion strength was measured at a tensile speed of 50 mm/min.

Then, a value obtained by dividing the measured shear adhesion strength value by the adhesion area of the two single-sheet test pieces was determined as the adhesion strength at ambient temperature.

It was determined that an adhesion strength of 6.0 MPa or more indicates sufficient adhesion strength.

In addition, two single-sheet test pieces each having a size of 30 mm × 60 mm were separately cut out from the adhesive surface-coated electrical steel sheet in each example, a laminated body sample obtained by overlapping the 30 mm × 10 mm end portions in such a manner that the adhesive coatings face each other was placed in an atmosphere of 150°C, and the shear adhesion strength was measured under the same conditions as in the case of the ambient temperature, with the steel sheet temperature at 150°C.

Then, a value obtained by dividing the measured shear adhesion strength value by the adhesion area of the two single-sheet test pieces was determined as the adhesion strength at 150°C.

It was determined that an adhesion strength of 2.0 MPa or more indicates sufficient adhesion strength.

### (Magnetic Characteristics)

Single-sheet test pieces each having a size of 55 mm × 55 mm were cut out from the adhesive surface-coated electrical steel sheet of each example. Then, the two single-sheet test pieces were overlapped with each other in such a manner that the adhesive coatings faced each other. The overlapped body was heated and pressed under conditions of a pressurizing temperature: 250°C, a pressure: 2 MPa, and a holding (heating and pressing) time: 1 minute to obtain a laminated body sample.

Iron losses in a rolling direction and an orthogonal-to-rolling direction in the obtained laminated body sample were measured by methods of measurement of magnetic characteristics of a single steel sheet specified in JIS 2556:2015, and an average value of iron losses W10/400 in the rolling direction and the orthogonal-to-rolling direction was determined.

It was determined that an iron loss of 10.9 W/Kg or less indicates excellent magnetic characteristics.

### (External Appearance)

Three 5 mm square test pieces were cut out from the adhesive surface-coated electrical steel sheet of each example to obtain the test pieces.

The surface of the adhesive coating of each test piece was observed at three locations with a scanning electron microscope at a magnification of 100 times. The observation was performed for a total of 9 fields of view.

Then, evaluation was performed according to the following evaluation criteria, and A and B were determined as a pass.
A: No coating defects such as cracks, fissures, or peeling were observed at all.
B: The area fraction of coating defects was 10% or less.
C: The area fraction of coating defects was more than 10% and less than 30%.
D: The area fraction of coating defects was 30% or more.

**[Table 2]**

| No. | Adhesive coating | | | | | | Adhesive surface-coated electrical steel sheet | Laminated body | | |
|---|---|---|---|---|---|---|---|---|---|---|
| | Logarithmic decrement curve | | | | Pencil hardness | | External appearance | Adhesion strength [MPa] | | Magnetic characteristic iron loss [W/kg] |
| | P1 | P2 | P1/P2 | Peak temperature [°C] | Before heating | After heating | | Ambient temperature | 150°C | W 10/400 |
| Example 1 | 0.20 | 0.20 | 1.00 | 142 | 4H | 5H | B | 10.0 | 3.5 | 10.5 |
| Example 2 | 0.18 | 0.20 | 0.90 | 132 | 3H | 5H | A | 9.7 | 3.0 | 10.2 |
| Example 3 | 0.20 | 0.17 | 1.18 | 135 | 4H | 5H | B | 12.1 | 4.4 | 10.9 |
| Example 4 | 0.15 | 0.14 | 1.07 | 133 | 4H | 5H | B | 11.8 | 4.3 | 10.7 |
| Example 5 | 0.10 | 0.12 | 0.83 | 145 | 4H | 6H | B | 12.3 | 4.5 | 10.8 |
| Example 6 | 0.12 | 0.10 | 1.20 | 131 | 3H | 5H | B | 10.3 | 3.5 | 9.9 |
| Example 7 | 0.07 | 0.10 | 0.70 | 147 | 4H | 6H | B | 12.4 | 3.1 | 10.6 |
| Example 8 | 0.23 | 0.18 | 1.28 | 133 | 3H | 5H | B | 9.8 | 2.0 | 10.9 |
| Comparative Example 1 | 0.02 | 0.03 | 0.60 | 112 | 5H | 5H | B | 4.5 | 1.4 | 10.2 |
| Comparative Example 2 | 0.02 | 0.04 | 0.50 | 169 | 5H | 7H | B | 15.3 | 5.8 | 12.6 |
| Comparative Example 3 | 0.73 | 0.50 | 1.46 | 124 | 2H | 4H | C | 5.4 | 1.4 | 10.4 |
| Comparative Example 4 | 0.19 | 0.12 | 1.58 | 162 | 4H | 6H | C | 13.5 | 4.2 | 13.1 |
| Comparative Example 5 | 0.62 | 0.48 | 1.29 | 110 | 3H | 3H | C | 4.2 | 0.3 | 10.3 |
| Comparative Example 6 | 0.12 | 0.21 | 0.57 | 138 | 3H | 5H | D | 10.3 | 3.3 | 12.9 |
| Comparative Example 7 | 0.05 | 0.11 | 0.45 | 172 | 5H | 7H | B | 14.5 | 4.6 | 13.3 |
| Comparative Example 8 | 0.04 | 0.05 | 0.80 | 175 | 5H | 7H | C | 13.1 | 5.6 | 11.2 |
| Comparative Example 9 | 0.31 | 0.21 | 1.48 | 131 | 3H | 4H | B | 6.5 | 1.3 | 10.3 |
| Comparative Example 10 | 0.03 | 0.03 | 1.00 | 160 | 5H | 5H | B | 3.1 | 0.8 | 10.1 |

From the above-described results, it can be seen that the present examples are excellent in external appearance, adhesion strength at a range from ambient temperature to a high temperature, and magnetic characteristics as compared with the comparative examples.

### INDUSTRIAL APPLICABILITY

According to the present disclosure, provided are the adhesive surface-coated electrical steel sheet having excellent adhesion strength at a range from ambient temperature to a high temperature and excellent magnetic characteristics, the laminated core using the same, and the manufacturing methods thereof. Therefore, the industrial applicability is high.

### REFERENCE SIGNS LIST

10 Adhesive surface-coated electrical steel sheet
10A Electrical steel sheet
10B Adhesive coating
10C Adhesive coating
11 Punching member formed of an adhesive surface-coated electrical steel sheet
100 Laminated core

## Claims

1. An adhesive surface-coated electrical steel sheet comprising:
the electrical steel sheet; and
the adhesive coating that is provided on at least a part of one surface or both surfaces of the electrical steel sheet, the adhesive coating including a crosslinkable thermoplastic resin A and a thermoplastic resin B other than the crosslinkable thermoplastic resin A,
wherein in the adhesive coating, a peak temperature in a logarithmic decrement curve measured by a rigid-body pendulum test is 130°C to 150°C, and a peak ratio P1/P2 of a peak logarithmic decrement P1 in the logarithmic decrement curve after heating at 200°C for 1 minute to a peak logarithmic decrement P2 in the logarithmic decrement curve before the heating is 0.70 to 1.30.

2. The adhesive surface-coated electrical steel sheet according to claim 1, wherein
the P2 is 0.07 to 0.30.

3. The adhesive surface-coated electrical steel sheet according to claim 1, wherein
the adhesive coating before the heating has a pencil hardness of 3H to 4H.

4. The adhesive surface-coated electrical steel sheet according to claim 1, wherein
the P1 is 0.05 to 0.25.

5. The adhesive surface-coated electrical steel sheet according to claim 1, wherein
the adhesive coating after the heating has a pencil hardness of 5H to 6H.

6. The adhesive surface-coated electrical steel sheet according to claim 1, wherein
the crosslinkable thermoplastic resin A is one or more resins selected from the group consisting of a (meth)acrylic resin and a polyester resin.

7. A laminated core comprising a plurality of the adhesive surface-coated electrical steel sheets according to any one of claims 1 to 6, the adhesive surface-coated electrical steel sheets being laminated,
wherein the electrical steel sheets are bonded to each other by a cured coating of the adhesive coating.

8. The laminated core according to claim 7, wherein
the laminated core has a space factor of 96% to 98%.

9. A manufacturing method for an adhesive surface-coated electrical steel sheet, the method comprising:
a coating step of coating at least a part of one surface or both surfaces of an electrical steel sheet with an adhesive coating-forming coating liquid to obtain a coated steel sheet; and
a coating film-forming step of heating the coated steel sheet to a drying temperature of 100°C to 200°C at a temperature rising rate of 6.0°C/sec or less, retaining the coated steel sheet within a temperature range between -10°C from the drying temperature and the drying temperature for 10 to 90 seconds, and drying the coated steel sheet, to form an adhesive coating on the surface of the electrical steel sheet.

10. The manufacturing method for an adhesive surface-coated electrical steel sheet according to claim 9, wherein
in the coating step, the adhesive coating-forming coating liquid contains a crosslinkable thermoplastic resin A and a thermoplastic resin B other than the crosslinkable thermoplastic resin A, and
a mass ratio of the crosslinkable thermoplastic resin A to the thermoplastic resin B is 97/3 to 70/30.

11. A manufacturing method for a laminated core, the method comprising:
a coating step of coating at least a part of one surface or both surfaces a surface of an electrical steel sheet with an adhesive coating-forming coating liquid to obtain a coated steel sheet;
a coating film-forming step of heating the coated steel sheet to a drying temperature of 100°C to 200°C at a temperature rising rate of 6.0°C/sec or less, retaining the coated steel sheet within a temperature range between -10°C from the drying temperature and the drying temperature for 10 to 90 seconds, drying the coated steel sheet, and forming an adhesive coating on the surface of the electrical steel sheet, to obtain an adhesive surface-coated electrical steel sheet;
a punching step of punching the adhesive surface-coated electrical steel sheet to obtain a punching member;
a laminating step of laminating a plurality of the punching members to obtain a laminated body; and
a bonding step of heating the laminated body to a pressurizing temperature within a temperature range of 200°C to 300°C, and retaining the laminated body within a range between -10°C from the pressurizing temperature and the pressurizing temperature for 1 to 60 minutes while applying a pressurizing force of 0.5 to 10 MPa.
